**Europäisches Patentamt**

**European Patent Office**

**Office européen des brevets**

(19)

(11) Veröffentlichungsnummer: **0 269 736**
**A1**

(12) **EUROPÄISCHE PATENTANMELDUNG**
Veröffentlicht nach Art. 158 Abs. 3 EPÜ

(21) Anmeldenummer: **86904990.8**

(22) Anmeldetag: **29.05.86**

Daten der zugrundeliegenden internationalen Anmeldung:

(86) Internationale Anmeldenummer:
**PCT/SU86/00055**

(87) Internationale Veröffentlichungsnummer:
**WO87/07257 (03.12.87 87/27)**

(51) Int. Cl.³: **C 04 B 11/00**
**C 04 B 28/14**

---

(43) Veröffentlichungstag der Anmeldung:
**08.06.88 Patentblatt 88/23**

(84) Benannte Vertragsstaaten:
**AT DE FR IT**

(71) Anmelder: **BELORUSSKY POLITEKHNICHESKY INSTITUT**
**Leninksy pr., 65**
**Minsk, 220027(SU)**

(72) Erfinder: **LYASHKEVICH, Igor Mikhailovich**
**ul. Vostochnaya, 30-88**
**Minsk, 220013(SU)**

(72) Erfinder: **RAPTUNOVICH, Galina Solomonovna**
**ul. Vostochnaya, 30-88**
**Minsk, 220013(SU)**

(72) Erfinder: **SAMTSOV, Valery Pavlovich**
**ul. Shirokaya, 38-4-33**
**Minsk, 220131(SU)**

(72) Erfinder: **DANKO, Gennady Yakovlevich**
**ul. Chkalova, 1-40**
**Minsk, 220039(SU)**

(72) Erfinder: **SUSHKEVICH, Vikenty Grigorievich**
**ul. Volgo-Donskaya, 23-2**
**Minsk, 220049(SU)**

(72) Erfinder: **USTIMOVICH, Alla Borisovna**
**ul. Korotkevicha, 11-7**
**Minsk, 220039(SU)**

(72) Erfinder: **ALKHOVA, Taisia Ivanovna**
**Leninsky pr., 137-37**
**Minsk, 220114(SU)**

(72) Erfinder: **KOVALENKO, Sergei Vladimirovich**
**ul. Kedyshko, 14-1**
**Minsk, 220023(SU)**

(74) Vertreter: **von Füner, Alexander, Dr. et al,**
**Patentanwälte v. Füner, Ebbinghaus, Finck Mariahilfplatz 2 & 3**
**D-8000 München 90(DE)**

---

(54) **ZUBEREITUNG ZUR HERSTELLUNG VON GIPSGEGENSTÄNDEN.**

(57) Die Komposition zur Herstellung von Gipserzeugnissen enthält als Gipskomponente gipshaltige Abfälle und außerdem Kalk und Wasser bei folgendem Vernhältnis der Komponenten (Masse%):

| | |
|---|---|
| gipshaltige Abfälle | 25 bis 46 |
| Kalk | 8,0 bis 24,5 |
| Wasser | bis 100 |

Die Komposition zur Herstellung von Gipserzeugnissen enthält ein Gipsbindemittel, Kalk, Wasser und Zusätze, und zwar Kaliumaluminiumalaun, Eisenvitriol, Mineralpigment, tierischen Leim, die zusammen zugesetzt werden, oder durch

./...

Kunstkautschuklatex oder durch ein wasserlösliches Polymerisationsharz modifzierte Glasfasern und Kaliumnatriumtartrat bei folgendem Verhältnis der Komponenten (Masse%):

| | |
|---|---|
| Gipsbindemittel | 50 bis 62 |
| Kalk | 0,4 bis 3,0 |
| Kaliumaluminiumalaun | 0,1 bis 1,0 |
| Eisenvitriol | 0,4 bis 1,5 |
| Mineralpigment | 0,04 bis 0,55 |
| tierischer Leim | 0,08 bis 0,5 |
| oder | |
| Glasfasern, modifiziert durch Kunstkautschuklatex oder wasserlösliches Polymerisationsharz | 1,5 bis 8,0 |
| Kaliumnatriumtartrat | 1,2 bis 3,1 |
| Wasser | bis 100 |

# KOMPOSITION ZUR HERSTELLUNG VON GIPSERZEUGNISSEN

## Gebiet der Technik

Die vorliegende Erfindung betrifft Gipsbaustoffe, und zwar Kompositionen zur Herstellung von Gipserzeugnissen.

Gipserzeugnisse können als Blöcke, Bausteine, Zwischenwandplatten und auch als Dekorations- und Verkleidungsplatten hergestellt werden, die im Gesellschafts- und Industriebau eine weite Verbreitung finden.

So, z.B., stehen die Dekorations- und Verkleidungsplatten nach ihren Eigenschaften nicht hinter Naturstein zurück und können vorgegebene Oberflächenform, Textur und Färbung des Musters haben, die in der Natur nicht anzutreffen sind. Deshalb werden sie auch vielfach für die Innenverkleidung von Verwaltungs- und Wohnbauten und anderen Gebäuden verwendet.

## Zugrundeliegender Stand der Technik

Es ist eine Komposition zur Herstellung von Gipserzeugnissen bekannt, bestehend aus einem Gipsrohstoff in Form von Gipsstein und einem Gipsbindemittel in Form von Gips-halbhydrat in einem Gewichtsverhältnis von 30:60 Masse%. Der Gipsrohstoff soll nicht mehr als 15 bis 40 Masse% Wasser enthalten (FR-Anmeldung Nr. 2380234, C04B 11/00, bekanntgemacht am 2.9. 1978).

Die Komposition wird durch Vermahlen des genannten Gipsrohstoffs bis zu einer spezifischen Oberfläche von 2500 bis 7000 $cm^2$/g (nach Blaine) und des genannten Gipsbindemittels bis zu einer spezifischen Oberfläche von 1000 bis 4000 $cm^2$/g (nach Blaine) mit anschließendem intensivem Vermischen der beiden Komponenten hergestellt. Aus der entstandenen Komposition werden durch Pressen Gipserzeugnisse hergestellt, wie, z.B., Platten, Trennwände u.a.

In der beschriebenen Komposition spielt der Gipsstein die Rolle eines Füllstoffs und dient der Einsparung des Gipsbindemittel und der Kostensenkung der Erzeugnisse.

Das hydratisierte Gipsbindemittel stellt den Festigkeitsträger in solchen Systemen dar. Darum sind derartige Gipserzeugnisse durch geringe Festigkeitswerte gekennzeichnet: die Druckfestigkeit liegt bei 3 bis 17 MPa und die Biegungsfestigkeit bei 1,2 bis 5 MPa, und ausserdem sind sie nicht wasserfest (der Erweichungskoeffizient beträgt 0,3 bis 0,35).

Es ist eine Komposition zur Herstellung von künstlichem Marmor (bekannt SU-Urheberschein Nr. 668915, C04B 27/02, bekanntgemacht am 30.6.1979 im Bulletin Nr. 23 "Entdeckungen, Erfindungen, Geschmacksmuster, Warenzeichen") mit folgender Zusammensetzung (Masse%):

| | |
|---|---|
| Gipsbindemittel - Gipshalbhydrat | 62 bis 65 |
| Pigmente | 0,6 bis 0,65 |
| tierischer Leim | 0,35 bis 0,4 |
| weißer Portlandzement | 8 bis 12 |
| Wasser | bis 100 |

Die Komposition wird durch übliches Vermischen der Komponenten hergestellt und anschließend einer Erhärtung unterworfen.

Die so hergestellten Platten aus künstlichen Marmor weisen eine geringe Druckfestigkeit von 19,7 MPa und eine niedrige Wasserfestigkeit auf.

Es ist eine Komposition (JP-Anmeldung Nr.54-16535, C04B 13/14, bekanntgemacht am 22.6.1979) bekannt, bestehend aus einem wäßrigen Gemisch aus einem Gipsbindemittel, Polyvinylstyrol, einer oder mehreren Metallverbindungen (Cu, Ca, Ba, Zn, Sr, Ti, Cr-Sulfat oder Nitrat, deren Oxide oder Hydroxide) und einem oder mehreren wärmehärtbaren Kunstharzen (Kopolymerisat von Vinylazetet und Glyzidilmetakrylat).

Die Komposition wird zur Herstellung von Paneelen u und Platten mit hoher Wasserfestigkeit und guten Wärme- und Schalldämmeigenschaften verwendet. Die Festigkeitswerte und der Abriebkoeffizient dieser Platten sind jedoch niedrig.

Es ist auch eine Komposition zur Herstellung von Gipserzeugnissen auf der Basis eines Gipsbindemittels, und zwar Gipshalbhydrats bekannt, die Löschkalk und Wasser enthält (JP Anmeldung Nr. 56-38542, C04B 15/00, bekanntgemacht 1981). Die Komponenten werden gemischt, die entstandene Komposition wird unter Druck geformt und mit Kohlendioxid karbonisiert. Die hergestellten Platten sind durch erhöhte Zerbrechlichkeit und geringe Festigkeit gekennzeichnet.

Offenbarung der Erfindung

Der Erfindung liegt die Aufgabe zugrunde, eine Komposition zur Herstellung von Gipserzeugnissen durch entsprechende qualitative und quantitative Auswahl der Komponenten zu schaffen, die eine hohe Festigkeit, eine erhöhte Wasserbeständigkeit und gute dekorative Eigenschaften der Gipserzeugnisse gewährleistet.

Die Aufgabe wird dadurch gelöst, daß eine Komposition zur Herstellung von Gipserzeugnissen angeboten wird, die eine Gipskomponente, Kalk und Wasser enthält und die gemäß der Erfindung als Gipskomponente gipshaltige Abfälle bei folgendem Verhältnis der Komponenten enthält (Masse%):

| | |
|---|---|
| gipshaltige Abfälle | 25 bis 46 |
| Kalk | 6.0 bis 24.5 |
| Wasser | bis 100 |

Die erfindungsgemäße Komposition ermöglicht eine wesentliche Verbesserung der physikalisch-mechanischen Kennwerte der aus der Komposition hergestellten Gipserzeugnisse, und zwar der Druckfestigkeit, der Wasserbeständigkeit, der Härte und der dekorativen Eigenschaften. Die Verbesserung dieser Eigenschaften wird durch das qualitative und quantitative Verhältnis der Komponenten in der Komposition bewirkt.

Als gipshaltige Abfälle können Abfälle verschiedener Industriezweige, die in Form von Kalziumsulfatdinydrat auftreten, u.a. Phosphatgips, Borgips, Zitrogips,

ohne deren traditionelles Überführen in ein Bindemittel durch Brennen verwendet werden. Es können auch Produktionsabfälle von Gipspapptafeln und -zwischenwänden verwendet werden. Die Verwendung von Abfällen als Hauptgipskomponente der Komposition schafft eine wesentliche Erweiterung der Rohstoffbasis der Gipsindustrie ohne zusätzlichen Energieverbrauch für die Überführung des Gipssteins in Gipsbindemittel. Gleichzeitig werden Probleme des Umweltschutzes und der Rückgewinnung großer Landflächen gelöst. Das Vorhandensein von Kalk in der Komposition ermöglicht es, die Kynetik der Prozesse der Hydratation und Strukturbildung bei ihrer Aufbereitung und außerdem ihre Phasenzusammensetzung im Ablauf der Zeit zu regulieren und somit auf die physikalisch-mechanischen Endwerte der aus der Komposition hergestellten Gipserzeugnisse Einfluß zu nehmen.

Wenn der Komposition Gipsstein als gipshaltiger Abfall zugesetzt wird, kann sie ein Gipsbindemittel enthalten und folgendermaßen zusammengesetzt sein (Masse%):

| | |
|---|---|
| Gipsstein | 25 bis 40 |
| Gipsbindemittel | 3 bis 10 |
| Kalk | 8,5 bis 20 |
| Wasser | bis 100 |

Solch eine Komposition gewährleistet für die Erzeugnisse eine ausreichende Entschalfestigkeit und eine hohe Druckfestigkeit. Außerdem besitzen die Erzeugnisse gute Dekorationseigenschaften. Zur Schaffung einer glatten, glänzenden Oberfläche und einer höheren Härte der Gipserzeugnisse ist es zweckmäßig, der Komposition 4 bis 5 Masse%. Kaliumaluminiumalaun zuzusetzen.

Die Aufgabe wird auch dadurch gelöst, daß eine Komposition angeboten wird, die ein Gipsbindemittel, Kalk und Wasser einschließt und gemäß der Erfindung Zusätze enthält, als welche Kaliumaluminiumalaun, Eisenvitriol, Mineralpigment, tierischer Leim, zusammen genom-

men oder durch Kunstkautschuklatex oder durch ein wasserlösliches Polymerisationsharz modifizierte Glasfasern
und Kaliumnatriumtartrat bei folgendem Verhältnis der
Komponenten (Masse%) dienen:

| | |
|---|---|
| Gipsbindemittel | 50 bis 62 |
| Kalk | 0,4 bis 3,0 |
| Kaliumaluminiumalaun | 0,1 bis 1,0 |
| Eisenvitriol | 0,4 bis 1,5 |
| Mineralpigment | 0,04 bis 0,55 |
| tierischer Leim | 0,08 bis 0,5 |

oder

| | |
|---|---|
| Glasfasern, modifiziert | |
| durch Kunstkautschuklatex | |
| oder wasserlösliches Poly- | |
| merisationsharz | 1,5 bis 6,0 |
| Kaliumnatrimtartrat | 1,2 bis 3,1 |
| Wasser | bis 100 |

Die erfindungsgemäße Komposition ermöglicht die
Herstellung von Gipserzeugnissen mit vorgegebenen Eigenschaften, einer hohen Entschalfestigkeit, einer niedrigen
Wasseraufnahme und einer hohen Druckfestigkeit nach
28 Tagen. Außerdem kann man aus der erfindungsgemäßen
Komposition mit dem ersten Zuschlagsortiment dünnwandige Gipserzeugnisse mit verringerten Schwundverformungen herstellen. Das zweite Zuschlagsortiment verleiht den
aus der Komposition hergestellten Gipserzeugnissen eine
hohe Schlagzähigkeit und Biegungsfestigkeit.

Zur Verbesserung der Adhäsion der Glasfasern zum
Gipsbindemittel und zur Gewährleistung der dadurch
bedingten hohen Festigkeit der Gipserzeugnisse ist
es zweckmäßig, daß die Komposition Glasfasern enthält,
die durch 1,7 bis 2,7 Masse% Kunstkautschuklatex oder
durch 0,1 bis 1,6 Masse% wasserlösliches Polymerisationsharz modifiziert sind.

Diese und weitere Vorteile der Erfindung werden
sichtbar aus folgender ausführlicher Beschreibung. Wie

- 6 -

0269736

schon oben erwähnt, wird eine Komposition folgender Zusammensetzung angeboten (Masse%):

gipshaltige Abfälle              25 bis 46

Kalk                             8,0 bis 24,5

Wasser                           bis 100

Die Komposition wird durch Mischen der gipshaltigen Abfälle, des Kalks und des Wassers bis zur Entstehung einer Mischung mit einem Wasserfestverhältnis von 0,8 bis 1,25 hergestellt. Die entstandene Komposition wird unter Druck geformt mit Ableitung des überschüssigen Wassers auf herkömmliche Weise.

Als gipshaltige Abfälle kann die Komposition Abfälle verschiedener Inaustriezweige enthalten, die im Form von Kalziumsulfatdinydrat (Gipsstein)anfallen, u.a. als Phosphatgips, Borgips und Zitrogips, ohne ihre Überführung in ein Bindemittel durch einen Brennprozeß. Sie kann auch Abfälle der Herstellung Gipspapptafeln (Trockenputztafeln) enthalten, die ein aus Gipsstein und Pappstücken bestehendes Gemisch darstellen.

Der Anteil von gipshaltigen Abfällen in der Komposition im genannten Bereich gewährleistet für die Gipserzeugnisse hohe Werte der Druckfestigkeit (nach 28 Tagen bis 25 MPa), der Biegungsfestigkeit (bis 12 MPa), eine erhöhte Wasserbestandigkeit (Erweichungskoeffizient 0,69) und gute Dekorationseigenschaften.

Der Gehalt an Kalk in der Komposition in der genannten Menge ermöglicht die Herstellung von Gipserzeugnissen mit einer hohen Entschalfestigkeit, einer erhöhten Härte ihrer Oberflachen (Härte nach Mohs betragt 3) und einer hohen Wasserbestängidkeit, die im Laufe der Zeit zunimmt (Erweichungskoeffizient 0,69).

Wenn Gipsstein als gipshaltiger Abfall verwendet wird, ist es zweckmäßig, daß die Komposition ein Gipsbindemittel bei folgendem Verhältnis der Komponenten enthält (Masse%):

Gipsstein                        25 bis 40

Gipsbindemittel                          3 bis 10
Kalk                                     8,5 bis 20
Wasser                                   bis 100

Die aufgeführte Komposition erhält man durch Mischen von Gipsstein, Kalk und Wasser bis zur Entstehung einer Mischung mit einem Wasserfestverhältnis von 0,8 bis 1,25 mit anschließender Zugabe eines Gipsbindemittels bei ununterbrochenem Rühren. Als Gipsbindemittel kann Gipshalbhydrat oder Anhydrit verwendet werden. Die gewonnene Komposition wird unter Druck geformt mit Ableitung des überschüssigen Wassers auf herkömmliche Weise.

In der angeführten Komposition stellt der Gipsstein die wichtigste strukturbildende Komponente dar. Der Zusatz von Gipsbindemittel zur Mischung in geringer Menge (3 bis 10 Masse%) dient der Schaffung einer Übersättigung im System Gipsstein – Wasser, deren Niveau und Haltezeit durch den Zusatz von Kalk reguliert wird. Dadurch werden in der Komposition bei der Verformung unter Druck Bedingungen geschaffen, die die Entstehung kristallartiger Kontakte zwischen den Teilchen des Gipssteins fördern, d.h. die Bildung einer festen Kristallstruktur. Die Druckfestigkeit der Gipserzeugnisse nach 28 Tagen beträgt 20 MPa.

Der Bereich des mengenmäßigen Gehalts an Gipsbindemittel in der Komposition wird durch folgende Faktoren begrenzt. Bei einem Gehalt an Gipsbindemittel unter 3 Masse% in der Komposition verkürzt sich stark die Haltezeit der Übersättigung der Lösung in Bezug auf den Gipsstein, wodurch die Festigkeit der Gipserzeugnisse sinkt, da es zu keiner Verfestigung der Kristallkontakte im Verlaufe der Zeit kommt.

Der Gehalt an Gipsbindemittel in der Komposition über 10 Masse% ist ebenfalls unerwünscht, da das zu einer Verteuerung der Gipserzeugnisse ohne Verbesserung ihrer Festigkeitswerte führt.

Der Bereich des mengenmässigen Gehalts an Kalk in der Komposition ist durch seine funktionelle Bestimmung festgelegt, und zwar als Regulator des Übersättigungsgrads im System Gipsstein- Wasser (nicht mehr als 20 Masse%) und als Komponente, die die Entschalfestigkeit der Erzeugnisse erhöht (nicht weniger als 8,5 Masse%).

Die aufgeführte Komposition kann auch 4 bis 5 Masse%. Kaliumaluminiumalaun enthalten, der gleichzeitig mit dem Wasser dem Kalk und dem Gipsstein zugesetzt wird. Er verbessert wesentlich die dekorativen Eigenschaften der Gipserzeugnisse, z.B. von Verkleidungsplatten.

Es wird auch eine Komposition angeboten, die ein Gipsbindemittel, Kalk, Wasser und Zusätze enthält, und zwar Kaliumaluminiumalaun, Eisenvitriol, Mineralpigment und tierischen Leim, die zusammen genommen werden. Als Zusätze können außerdem durch Kunstkautschuklatex oder durch ein wasserlösliches Polymerisationsharz modifizierte Glasfasern und Kaliumnatriumtartrat verwendet werden.

Diese Komposition hat folgende Zusammensetzung (Masse%):

| | |
|---|---|
| Gipsbindemittel | 50 bis 62 |
| Kalk | 0,4 bis 3,0 |
| Kaliumaluminiumalaun | 0,1 bis 1,0 |
| Eisenvitriol | 0,4 bis 1,5 |
| Mineralpigment | 0,04 bis 0,55 |
| tierischer Leim | 0,08 bis 0,5 |
| Wasser | bis 100 |

Die Komposition wird auf folgende Weise hergestellt. Man mischt das Mineralpigment mit 10%-iger wäßriger Lösung des tierischen Leims und dem Gipsbindemittel in einer Menge bis 3 Masse%. Die entstandene Meschung setzt man der Gipsmischung zu, die durch Mischen des restlichen Wassers mit Kaliumaluminiumalaun, Kalk, dem restlichen Gipsbindemittel und einer Eisenvitriollösung hergestellt wird. Die entstandene Komposition
hat die oben aufgeführte Zusammensetzung. Man gießt
sie in Formen und preßt bei gleichzeitiger Ableitung
des überschüssigen Wassers bis zu einem restlichen
Wasserfestverhältnis von 0,18 bis 0,22.

Die hergestellten Gipserzeugnisse, z.B. Platten,
haben eine ausreichend hohe Entschalfestigkeit (6 bis
8 MPa), brauchen nicht getrocknet zu werden, haben eine
Oberfläche mit Hochglanz, der auch im Laufe der Zeit
erhalten bleibt. Derartige Dekorationsplatten haben
nach 1,5 bis 3 Stunden eine Druckfestigkeit von 20
bis 30 MPa und einen Abriebkoeffizienten von 1,6 g/cm$^2$.

Die Komponenten werden ausgehend von ihrer funktionellen Bestimmung ausgewählt, und zwar kann Gipshalbhydrat oder Anhydrit als schnellhärtendes Mineralbindemittel, Kalk als Stabilisator und Plastifikator der
Komposition, Mineralpigment als färbender Zusatz,
tierischer Leim und ein Teil des Gipshalbhydrats als
Schutz- und Bindezusatzmittel, Kaliumaluminiumalaun
Al, K (SO$_4$)$_2$·2 H$_2$O als Stabilisierungs- und verdichtendes Zusatzmittel und Eisenvitriol als verdichtendes
und die dekorativen Eigenschaften verstärkendes
Zusatzmittel verwendet werden.

Die Menge an dem Gipsbindemittel und Wasser hängt
von der Qualität des Bindemittels ab und wird durch
die geforderte Fertigungsgerechtigkeit der Komposition
bei Gewährleistung einer hohen Leistung der Presseinrichtung bestimmt.

Kalk wird in die Komposition in einer Menge bis zu
3 Masse% gegeben, da ein höherer Kalkgehalt die Wasserfestigkeit der hergestellten Gipserzeugnisse verringert. Ein Kalkgehalt unter 0,4 Masse% in der Komposition ist nicht ausreichend zur Erfüllung der funktionellen Bestimmung des Kalks. Da die übrigen Komponenten chemische Zusätze darstellen, wird die Menge

ihrer Zugabe durch die Notwendigkeit der Erreichung einer hohen Festigkeit, guter, vorgegebener dekorativer Eigenschaften und einer niedrigen Wasseraufnahme bestimmt. Eine Abweichung der Mengenwerte von den angegebenen verschlechtert nicht nur die Qualität der Gipserzeugnisse, sondern auch die Leistung des Preßvorgangs.

Außerdem verbessern einzelne Zusätze in Verbindung mit anderen die Eigenschaften der Gipserzeugnisse, die ihren funktionellen Verwendungszweck bestimmen. So müssen z.B. Verkleidungsplatten für die Außenverkleidung von Gebäuden eine hohe Härte und Witterungsbeständigkeit aufweisen.

Das Mineralpigment übt nicht nur die Funktion eines Farbstoffs, sondern auch eines aktiven Mineralzusatzes aus, der im Gemisch mit dem Gipsbindemitteln und der Leimlösung die genannten Eigenschaften erheblich verbessert. Aus diesem Grund wird die Zusatzmenge des Pigments mit der Menge des Leims und des Gipsbindemittels abgestimmt.

Die Menge an dem Kaliumaluminiumalaun wird durch den mengenmäßigen Anteil an Eisenvitriol als ein die dekorativen Eigenschaften der hergestellten Gipserzeugnisse verstärkender Zusatz bestimmt.

Bevorzugte Ausführungsvariante der vorliegenden Erfindung

Als beste Variante wird eine Komposition folgender Zusammensetzung angeboten (Masse%):

| Gipspappabfälle | 42 bis 46 |
| Kalk | 20 bis 24,5 |
| Wasser | bis 100 |

Diese Komposition wird auf folgende Weise hergestellt.

Die Gipspappabfälle in Form verschieden großer Stücke werden wenigstens 4 Stunden in Wasser gehalten. Diese Zeit ist ausreichend zur Lösung der Kontakte zwischen den Teilchen. Danach wird das aus den Abfällen und Wasser bestehende Gemisch bis zur Entstehung einer homogenen,

plastischen Masse mit einer spezifischen Oberfläche der Teilchen der festen Phase von 9800 bis 10 900 cm$^2$/g gemahlen.

Der entstandenen Mischung wird Kalk zugesetzt.

Die entstandene Komposition wird unter Druck geformt, wobei das überschüssige Wasser auf bekannte Weise abgeleitet wird.

Das Aushalten der Abfälle der Produktion von Gipspapptafeln (Gipsfaserputzplatten), die ein Gemisch aus Gipsstein und Pappstücken darstellen, im Wasser und deren anschließende Naßvermahlung führt zur Auffaserung der Pappe und zu deren gleichmäßigen Verteilung in Form von Bewehrungsfasern in der gesamten Masse des Gipsbreis, was die Biegungsfestigkeit und die Druckfestigkeit der Gipserzeugnisse erhöht. Die Biegungsfestigkeit beträgt 12 MPa, die Druckfestigkeit 20 bis 25 MPa. Außerdem erleichtert das Aushalten des Gipssteins im Wasser, das zu einer Verringerung der Festigkeit der Kontakte zwischen den Teilchen führt, wesentlich den Prozeß der Feinvermahlung des Gipses. Die Durchführung dieses Prozesses im Gemisch mit Wasser (Naßmahlen) verhindert ein Anhalten der Gipsteilchen an der Oberfläche der Mahlkörper und an den Wänden der Kammer der Mahlvorrichtung und erhöht damit auch die Effektivität des Mahlprozesses. Bei der Herstellung von Gipspapptafeln und Gipsfaserputzplatten werden Zusätze in Form von Polyvinylazetatemulsion, Karbamid, Sulfit-Hefe-Ablauge, Dextrin und anderer Komponenten verwendet. Beim Naßmahlen der Abfälle werden die Teilchen des Gipssteins gleichmäßig mit hydrophoben Schichten bedeckt, die durch die Zugabe der genannten Zusätze entstehen. Dadurch erhöht sich die Wasserbeständigkeit der hergestellten Gipserzeugnisse (der Erweichungskoeffizient betrgat 0,62 bis 0,69). Die Zugabe von Kalk erhöht die Entschalfestigkeit der Gipserzeugnisse und bewirkt im Ergebnis der Karbonisierung eine Erhöhung der Härte der Oberfläche (die Härte nach Mohs beträgt 3) und eine Zunahme der Wasserbeständigkeit der Gipserzeugnisse im Laufe der Zeit.

Außerdem tritt die aufgeweichte, dispergierte Pappe, die aus Zellulose besteht, im Laufe der Zeit mit dem Kalk unter Bildung wasserunlöslicher Verbindungen in Wechselwirkung, was ebenfalls die Erhöhung der Wasserbeständigkeit der Gipserzeugnisse erheblich beeinflußt.

Die Verwendung von Gipspappeabfällen in den Kompositionen für die Produktion von Gipserzeugnissen erweitert wesentlich die Rohstoffbasis der Gipsindustrie ohne zusätzlichen Energieverbrauch für die Überführung des Gipssteins in ein Gipsbindemittel.

Eine andere, zu bevorzugende Variante der Komposition hat folgende Zusammensetzung (Masse%):

| | |
|---|---|
| Gipsbindemittel | 52 bis 58,5 |
| Kalk | 1,5 bis 1,7 |
| Glasfasern | 1,5 bis 8,0 |
| modifiziert durch | |
| 1,7 bis 2,7 Masse% | |
| Kanstkautschuklatex | |
| oder | |
| 0,6 bis 1,6 Masse% | |
| eines wasserlöslichen | |
| Polymerisationsharzes | |
| Kaliumnatriumtartrat | 1,2 bis 3,1 |
| Wasser | bis 100 |

Die Komposition bereitet man durch Lösen des Kaliumnatriumtartrats in Wasser mit anschließender Zugabe von Kalk, Gipsbindemittel und durch Kunstkautschuklatex oder wasserlösliches Polymerisationsharz modifizierten Glasfasern in die Lösung. Die Glasfasern werden vorher zum Schutz vor Auslaugung und zur Vergrößerung der Adhäsion zum Gipsbindemittel modifiziert. Die Modifikatoren erzeugen auf den Glasfasern elastische Häute mit einer hohen Adhäsion zu den Glasfasern.

Die Menge an dem Gipsbindemittel und Wasser hängt von der Qualität des Bindemittels ab und wird durch die Fertigungsgerechtheit der Komposition bei der Gewährleistung einer hohen Leistung des Preßvorgangs bestimmt.

Die Menge an den Glasfasern wird durch die Fertigungsgerechtheit der herzustellenden Komposition und die notwendige Festigkeit der Gipserzeugnisse bestimmt, während die Menge an den die Glasfasern modifizierenden Komponenten durch die spezifische Oberfläche der Glasfasern festgelegt wird. Die Menge an Kaliumnatriumtartrat und Kalk wird durch die Erreichung einer maximalen Dichte des Gipsmörtels und einer minimalen Wasseraufnahme der Gipserzeugnise bestimmt.

Vor dem Pressen wird der Boden der Form mit einer Monoschicht eines Füllstoffs, und zwar mit Sand oder Kies, bedeckt, der vorher durch Kunstkautschuklatex oder durch ein wasserlösliches Harz modifiziert worden ist.

Die Menge an dem Sand (Kies) beträgt 0,9 bis 1 Masse% in Bezug auf die Menge der Komposition und hängt von der Form der Sand- bzw. Kieskörner und vom spezifischen Preßdruck (5 bis 25 MPa) bei der Formgebung ab. Die Menge an dem Sand (Kies) beeinflußt die geforderte Dichte der Oberfläche der hergestellten Erzeugnisse und ihre Struktur. Die hergestellte Komposition wird in Formen eingefüllt und bei einem Druck von 5 bis 25 MPa gepreßt mit Ableitung des überschüssigen Wassers.

Die hergestellten Erzeugnisse, z.B. Gipsplatten für Fußböden, mit einem restlichen Wasserfestverhältnis von 0,15 bis 0,18 haben eine glatte Oberfläche, auf der die Berührungspunkte des Füllstoffs sichtbar sind. Diese Platten haben eine Druckfestigkeit nach 28 Tagen bis zu 55 MPa (Naturmarmor - 50 MPa), die Biegungsfestigkeit nach 28 Tagen beträgt bis 12 MPa (Naturmarmor - 5 MPa), der Abriebkoeffizient beträgt 0,5 bis 0,8 g/cm$^2$ (Naturmarmor - 0,8 bis 1,0 g/cm$^2$).

ppy- 14 -0269736

Aus den angeführten Werten ist ersichtlich, daß die strukturell-mechanischen Kennwerte dieser Platten nahe an die von farbigem Naturmarmor herankommen. Außerdem können die Platten eine vorgegebene Textur, Muster und Farbe haben, d. h. vorgegebene dekorative Eigenschaften und eine hervorragend glatte Oberfläche.

Platten für Fußböden aus der erfindungsgemäßen Komposition ermöglichen eine Einsparung solch wertvollen Rohstoffs wie farbiger Naturmarmor für derartige Zwecke.

Im folgenden werden konkrete Beispiele der Aufbereitung der erfindungsgemäßen Komposition und der Herstellung von Gipserzeugnissen aus dieser Komposition beschrieben.

Beispiel 1

Feuchte Abfälle von Gipspappetafeln in einer Menge von 1200 g werden in Wasser gelegt und nicht weniger als 4 Stunden im Wasser gehalten. Dann bringt man das entstandende Gemisch in eine Kugelmühle und mahlt es im Naßverfahren bis zur Entstehung einer homogenen, plastischen Masse mit einer spezifischen Oberfläche der Teilchen der festen Phase von 9800 cm$^2$/g. In die entstandene Mischung gibt man 710 g Kalk.

Man erhält eine Komposition mit folgender Zusammensetzung (Masse% ):

| | |
|---|---|
| Gipspappeabfälle | 37 |
| Kalk | 24,5 |
| Wasser | bis 100 |

Die Komposition bringt man in eine Preßform und preßt sie unter einem Druck von 10 MPa bei gleichzeitiger Ableitung des überschüssigen Wassers.

Die hergestellten rechteckigen Probekörper mit den Abmessungen 4x4x16 cm haben eine glatte, glänzende Oberfläche und folgende physikalisch-mechanischen Kennwerte:

| | |
|---|---|
| Druckfestigkeit, MPa | 16 |
| Biegungsfestigkeit, MPa | 8 |

Erweichungskoeffizient                     0.67
Härte nach der Mohsschen Skale             3

### Beispiel 2

Abfälle von Gipspapptafeln in einer Menge von 1495 g werden in Wasser gelegt und nicht weniger als 4 Stunden im Wasser gehalten. Dann bringt man das entstandene Gemisch in eine Kugelmühle und mahlt es im Naßverfahren bis zur Entstehung einer homogenen plastischen Masse mit einer spezifischen Oberfläche der Teilchen der festen Phase von 10900 cm$^2$/g. In die entstandene Mischung gibt man 260 g Kalk. Man erhält eine Komposition mit folgender Zusammensetzung (Masse%):

Gipspappeabfälle                           46
Kalk                                        8
Wasser                                    bis 100

Die Komposition bringt man in eine Preßform und preßt sie unter einem Druck von 10 MPa bei gleichzeitiger Ableitung des überschüssigen Wassers.

Die hergestellten rechteckigen Probekörper mit den Abmessungen 4x4x16 cm haben eine glatte, glänzende Oberfläche und folgende physikalisch-mechanischen Kennwerte:

Druckfestigkeit, MPa                       25
Biegungsfestigkeit, MPa                    11,0
Erweichungskoeffizient                     0,62
Härte nach der Mohschen Skale              3

### Beispiel 3

Feuchte Abfälle von Gipspapptafeln in einer Menge von 1350 g werden in Wasser gelegt und nicht weniger als 4 Stunden im Wasser gehalten. Dann bringt man das entstandene Gemisch in eine Kugelmühle und mahlt es im Naßverfahren bis zur Entstehung einer homogenen, plastischen Masse mit einer spezifischen Oberfläche der Teilchen der festen Phase von 10200 cm$^2$/g. In die entstandene Mischung gibt man 502 g Kalk. Man erhält eine Komposition mit folgender Zusammensetzung (Masse%):

Gipspappeabfälle                           40,5
Kalk                                       16,3

Wasser                                    bis 100

Die Komposition bringt man in eine Preßform und preßt sie unter einem Druck von 10 MPa bei gleichzeitiger Ableitung des überschüssigen Wassers.

Die hergestellten rechteckigen Probekörper mit den Abmessungen 4x4x16 cm werden physikalisch-mechanischen Prüfungen unterworfen. Sie haben folgende Kennwerte:

Druckfestigkeit, MPa                    20,5
Biegungsfestigkeit, MPa                  9,5
Erweichungskoeffizient                   0,58
Härte nach der Mohschen Skale            3.

Beispiel 4

Abfälle von Gipspapptafeln in einer Menge von 1150 g werden in Wasser gelegt und nicht weniger als 4 Stunden im Wasser gehalten. Dann bringt man das entstandene Gemisch in eine Kugelmühle und mahlt es im Naßverfahren bis zur Entstehung einer homogenen, plastischen Masse mit einer spezifischen Oberfläche der Teilchen der festen Phase von 10900 $cm^2/g$. In die entstandene Mischung gibt man 547 g Kalk. Man erhält eine Komposition mit folgender Zusammensetzung (Masse%):

Gipspappeabfälle                         42
Kalk                                     20
Wasser                                   38

Die Komposition bringt man in eine Preßform und preßt sie unter Druck bei gleichzeitiger Ableitung des überschüssigen Wassers.

Die hergestellten rechteckigen Probekörper mit den Abmessungen 4x4x16 cm werden physikalisch-mechanischen Prüfungen unterworfen. Sie haben folgende Kennwerte:

Druckfestigkeit, MPa                    24,5
Biegungsfestigkeit, MPa                 12,0
Erweichungskoeffizient                   0,69
Härte nach der Mohsschen Skale           3.

Beispiel 5

Gemahlener Gipsstein in einer Menge von 280 g und 59,5 g Kalk werden mit 201 g Wasser bis zur Entstehung einer homogenen Masse mit einem Wasserfestverhältnis von 0,8 gemischt. In die entstandene Mischung gibt man 59,5 g eines Gipsbindemittels, und zwar Anhydrit, und mischt intensiv im Verlauf einer Minute.

Die entstandene Komposition hat folgende Zusammensetzung (Masse%):

| | |
|---|---|
| gemahlener Gipsstein | 40 |
| Gipsbindemittel (Anhydrit) | 8,5 |
| Kalk | 8,5 |
| Wasser | 43 |

Dann bringt man das Gemisch in eine Preßform und formt es bei einem Druck von 7 MPa bei gleichzeitiger Ableitung des Wassers bis zur Erreichung eines restlichen Wasserfestverhältnisses von 0,25.

Die durch das Pressen hergestellten rechteckigen Probekörper mit den Abmessungen 4 x 4 x 16 cm haben unmittelbar nach dem Entschalen eine Druckfestigkeit von 3,5 MPa und im Alter von 28 Tagen eine Druckfestigkeit von 23 MPa und besitzen gute dekorative Eigenschaften.

Beispiel 6

Gipsstein in Form von Abfall der chemischen Produktion, und zwar Phosphatgips, wird in einer Menge von 360 g mit 240 g Kalk und 564 ml Wasser gemischt bis zur Entstehung einer homogenen Masse mit einem Wasserfestverhältnis von 0,94. In die entstandene Mischung gibt man 36 g eines Gipsbindemittels, und zwar Gipshalbhydrat, und mischt intensiv im Verlauf einer Minute.

Die entstandene Komposition hat folgende Zusammensetzung (Masse%):

| | |
|---|---|
| Phosphatgips | 30 |
| Gipshalbhydrat | 3 |
| Kalk | 20 |
| Wasser | 47 |

Die auf diese Weise hergestellte Mischung wird sofort geformt bei einem Druck von 10 MPa bei gleichzeitiger Ableitung des Wasserüberschusses bis zur Erreichung eines Wasserfestverhältnisses von 0,22.

Man erhält Platten mit den Abmessungen 20x20x1 cm, die sich leicht aus der Form nehmen lassen, keine Zwangstrocknung erfordern und eine glatte, glänzende Oberfläche haben. Die Platten haben eine Druckfestigkeit von 18,5 MPa.

Beispiel 7

Gipsstein in Form von Zitrogips in einer Menge von 2500 g und 1500 g Kalk mischt man mit 5000 ml Wasser bis zur Entstehung einer homogenen Masse mit einem Wasserfestverhältnis von 1,25. In die entstandene Mischung gibt man 1000 g Gips-Zement-Puzzolan-Bindemittel und mischt eine Minute lang.

Die entstandene Komposition hat folgende Zusammensetzung (Masse%):

| | |
|---|---|
| Zitrogips | 25 |
| Gips-Zement-Puzzolan-Bindemittel | 10 |
| Kalk | 15 |
| Wasser | 50 |

Die Komposition bringt man in eine Preßform und formt sie bei einem Druck von 10 MPa bei gleichzeitiger Ableitung des Wassers bis zur Erreichung eines restlichen Wasserfestverhältnisses von 0,3.

Beim Pressen stellt man Wandblöcke mit den Abmessungen 20x20x6,5 cm her, die unmittelbar nach dem Entschalen eine Festigkeit von 2 MPa aufweisen und nach 28 Tagen - 12 MPa.

Beispiel 8

In 322 ml Wasser löst man 37 g Kaliumaluminiumalaun. Dann gibt man in die entstandene Lösung 31,6 g gemanlenen Gipsstein, 112 g Kalk und mischt bis zur Entstehung einer homogenen Masse mit einem Wasserfestverhältnis von 0,85. Dann gibt man in die entstandene Mischung 35 g Gipshalbhydrat als Gipsbindemittel und mischt im Verlauf von 1,5 Minuten.

Die entstandene Komposition hat folgende Zusammensetzung (Masse%):

| | |
|---|---|
| Gipsstein | 31,4 |
| Gipshalbhydrat | 4,7 |
| Kalk | 15,2 |
| Kaliumaluminiumalaun | 5 |
| Wasser | 43,7 |

Dann stellt man aus der entstandenen Komposition rechteckige Probekörper mit den Abmessungen 4x4x16 cm, wie bereits im Beispiel 5 beschrieben, her.

Die entstandenen Probekörper haben eine glatte, glänzende Oberfläche, eine Druckfestigkeit im Alter von einem Monat von 30 MPa und die Härte von 3 nach der Mohsschen Skale.

Beispiel 9

In 350 ml Wasser löst man 29,2 g Kaliumaluminiumalaun. Dann gibt man in die entstandene Lösung 196 g Phosphatgips und 98 g Kalk und mischt bis zur Entstehung einer homogenen Masse mit einem Wasserfestverhältnis von 1,19. Dann gibt man in die entstandene Mischung 56 g Gipshalbhydrat als Gipsbeindemittel und mischt im Verlauf von 1,5 Minuten.

Die entstandene Komposition hat folgende Zusammensetzung (Masse%):

| | |
|---|---|
| Phosphatgips | 26,9 |
| Gipshalbhydrat | 7,7 |
| Kalk | 13,4 |
| Kaliumaluminiumalaun | 4 |
| Wasser | 48 |

Dann stellt man aus der entstandenen Komposition rechteckige Probekörper mit den Abmessungen 4x4x16 cm, wie bereits im Beispiels 5 beschrieben, her.

Die hergestellten Probekörper haben eine Druckfestigkeit von 26 MPa.

Die hergestellten Probekörper haben nach der Entschalung eine Festigkeit von 3 MPa und im Alter von 28 Tagen eine Festigkeit von 22 MPa und besitzen gute dekorative Eigenschaften.

Beispiel 10

Man bereitet eine 10%-ige Lösung von tierischem Leim, indem man 3 g Leim in 30 ml Wasser löst, auf. In die entstandene Lösung gibt man 10 g Mineralpigment und 50 g Gipshalbhydrat. In das restliche Wasser in einer Menge von 380 ml gibt man 10 g Kaliumaluminiumalaun, 10 g Kalk, 500 g des restlichen Gipshalbhydrats und 10 g Eisenvitriol. Aus den aufbereiteten Gemischen erhält man durch Mischen eine Komposition mit folgender Zusammensetzung (Masse%):

| Gipshalbhydrat | 55,00 |
|---|---|
| Kalk | 1,00 |
| tierischer Leim | 0,50 |
| Mineralpigment | 0,36 |
| Eisenvitriol | 1,00 |
| Kaliumaluminiumalaun | 1,00 |
| Wasser | 41,14 |

Die entstandene Komposition gießt man in eine Form und preßt bei gleichzeitiger Ableitung des Wassers bis zu einem restlichen Wasserfestverhältnis von 0,18 bis 0,22, wobei Gipsplatten hergestellt werden.

Die Gipsplatten haben eine Oberfläche mit Hochglanz, eine Festigkeit nach 2 Stunden von 7,8 MPa und brauchen nicht getrocknet zu werden. Im Alter von einem Monat haben sie eine Druckfestigkeit von 48 MPa, einen Abriebkoeffizienten von 1,1 $g/cm^2$ und eine Wasseraufnahme von 6,5%. Ihre Dichte beträgt 1,95 $g/cm^2$.

Beispiel 11

Man bereitet eine 10%-ige Lösung von tierischem Leim, indem man 0,8 g Leim in 8 ml Wasser löst, auf. In die entstandene Lösung gibt man 0,4 g Mineralpigment und 25 g Gipshalbhydrat. In das restliche Wasser in einer Menge von 455 ml gibt man 1,0 g Kaliumaluminiumalaun, 20 g Kalk, 475 g des restlichen Gipshalbhydrats und 15 g Eisenvitriol. Aus den eststandenen Gemischen erhält man durch Mischen eine Komposition mit folgender Zusammensetzung (Masse%):

| | |
|---|---|
| Gipshalbhydrat | 62,00 |
| Kalk | 2,00 |
| tierischer Leim | 0,08 |
| Mineralpigment | 0,04 |
| Eisenvitriol | 1,50 |
| Kaliumaluminiumalaun | 0,10 |
| Wasser | 34,28 |

Die hergestellte Komposition gießt man in eine Form und preßt bei gleichzeitiger Ableitung des Wassers bis zu einem restlichen Wasserfestverhältnis von 0,18 bis 0,22 der entstandenen Gipsplatten.

Die Gipsplatten haben eine Oberfläche mit Hochglanz und brauchen nicht getrocknet zu werden. Nach 2 Stunden beträgt die Druckfestigkeit 7,2 MPa. Im Alter von einem Monat beträgt die Druckfestigkeit 48 MPa, der Abriebkoeffizient 1,3 $g/cm^2$ und die Wasseraufnahme 7,1 %. Ihre Dichte beträgt 1,5 $g/cm^3$.

Beispiel 12

Man bereitet eine 10%-ige Lösung von tierischem Leim, indem man 0,8 g Leim in 8 ml Wasser löst, auf. In die entstandene Lösung gibt man 0,4 g Mineralpigment und 13 g Gipshalbhydrat. In das restliche Wasser in einer Menge von 455 g gibt man 1 g Kaliumaluminiumalaun, 20 g Kalk, 487 g des restlichen Gipshalbhydrats und 15 g Eisenvitriol. Aus den entstandenen Gemischen erhält man durch Mischen eine Komposition mit folgender Zusammensetzung (Masse%):

| | |
|---|---|
| Gipshalbhydrat | 50,00 |
| Kalk | 3,00 |
| tierischer Leim | 0,08 |

| Mineralpigment | 0,55 |
| Eisenvitriol | 1,50 |
| Kaliumaluminiumalaun | 0,10 |
| Wasser | 44,77 |

Die hergestellte Komposition gießt man in eine Form und preßt bei gleichzeitiger Ableitung des Wassers bis zu einem restlichen Wasserfestverhältnis von 0,18 bis 0,22 der entstandenen Gipsplatten.

Die Gipsplatten haben eine Hochglanzoberfläche, eine Festigkeit von 7 MPa nach 2 Stunden und brauchen nicht getrocknet zu werden. Im Alter von einem Monat haben sie eine Druckfestigkeit von 47 MPa, einen Abriebkoeffizienten von 0,9 $g/cm^2$ und eine Wasseraufnahme von 6%. Ihre Dichte beträgt 1,97 $g/cm^2$.

Beispiel 13

In 336 ml Wasser löst man Kaliumnatriumtartrat. In die entstandene Lösung gibt man 17 g Kalk und 588 g Gipshalbhydrat bei ununterbrochenem Rühren und anschließnd 30 g durch 17 g Nairitkautschuklatex modifizierte Glasfasern. Die hergestellte Komposition hat folgende Zusammensetzung (Masse%):

| Gipshalbhydrat | 58,8 |
| Kalk | 1,7 |
| Kaliumnatriumtartrat | 1,2 |
| Glasfasern, modifiziert durch 1,7% Nairitkautschuk- latex | 3,0 |
| Wasser | 35,3 |

Auf dem Boden der Preßform breitet man 360 g Sand der Korngruppe 2,5 bis 5,0 mm, modifiziert durch 30 g Epoxidharz, aus.

Dann gießt man die aufbereitete Komposition in die Form und preßt sie bei einem Druck von 10 MPa bei gleichzeitiger Ableitung des Wassers.

Die entstandene Gipsplatte für Fußböden mit einem restlichen Wasserfestverhältnis von 0,2 hat eine glatte Sichtfläche, auf der die Berührungspunkte des Sands sichtbar sind.

Die Platte hat folgende physikalisch-mechanischen Kennwerte: Druckfestigkeit,  MPa

| | |
|---|---|
| nach 5 Stunden | 29 |
| nach 28 Tagen | 58 |

Biegungsfestigkeit, MPa

| | |
|---|---|
| nach 5 Stunden | 6,5 |
| nach 28 Tagen | 13,2 |
| Abriebkoeffizient, $g/cm^2$ | 0,9 |
| Wasseraufnahme nach 28 Tagen, % | 7,1 |
| Schlagzähigkeit, $J/cm^2$ | 8,5 |

Beispiel 14

In 413 ml Wasser löst man Kaliumnatriumtartrat. In die entstandene Lösung gibt man 15 g Kalk und 520 g Gips - halbhydrat bei ununterbrochenem Rühren und anschließend 15 g durch 6 g Epoxidharz modifizierte Glasfasern. Die auf bereitete Komposition hat folgende Zusammensetzung (Masse%):

| | |
|---|---|
| Gipshalbhydrat | 52 |
| Kalk | 1,5 |
| Kaliumnatriumtartrat | 3,1 |
| Glasfasern, modifiziert | 1,5 |
| durch 0,6% Epoxidharz | |
| Wasser | 41,9 |

Auf dem Boden der Preßform breitet man 70 g Sand der Korngruppe 2,5 bis 5,0 mm, modifiziert durch 25 g Formaldehydharz, aus.

Dann gießt man die aufbereitete Komposition in die Form und preßt sie bei einem Druck von 10 MPa bei gleichzeitiger Ableitung des Wassers.

Die entstandene Gipsplatte für Fußböden mit einem restlichen Wasserfestverhältnis von 0,19 hat eine glatte Sichtfläche, auf der die Berührungspunkte des Sands sichtbar sind.

Die Platte hat folgende physikalisch-mechanischen Kennwerte:

Druckfestigkeit, MPa

| | |
|---|---|
| nach 5 Stunden | 20 |
| nach 28 Tagen | 52 |

Biegungsfestigkeit, MPa

| | |
|---|---|
| nach 5 Stunden | 4,7 |
| nach 28 Tagen | 8,5 |

Abriebkoeffizient, $g/cm^2$ — 0,5

Wasseraufnahme nach 28 Tagen, % — 6,5

Schlagzähigkeit, $J/cm^2$ — 7,0

Beispiel 15

In 336 ml Wasser löst man Kaliumnatriumtartrat. In die entstandene Lösung gibt man 17 g Kalk und 588 g Gipshalbhydrat bei ununterbrochenem Rühren und anschließend 80 g durch 27 g Dibutylstyrolkautschuk modifizierte Glasfasern. Die aufbereitete Komposition hat folgende Zusammensetzung (Masse%):

| | |
|---|---|
| Gipshalbhydrat | 58,8 |
| Kalk | 1,7 |
| Kaliumnatriumtartrat | 1,2 |
| Glasfaser, modifiziert | 8,0 |
| durch 2,7% Dibutylstyrollatex | |
| Wasser | 31,3 |

Auf dem Boden einer Preßform breitet man 60 g Sand der Korngruppe 2,5 bis 5,0 mm, modifiziert durch 1,5 g Karbamidharz, aus.

Dann gießt man die aufbereitete Komposition in die Form und preßt sie bei einem Druck von 10 MPa bei gleichzeitiger Ableitung des Wassers.

Die entstandene Gipsplatte für Fußböden mit einem restlichen Wasserfestverhältnis von 0,2 hat eine glatte Sichtfläche, auf der die Berührungspunkte des Sands sichtbar sind.

Die Platte hat folgende physikalisch-mechanischen Kennwerte:

Druckfestigkeit, MPa

    nach 5 Stunden               28

    nach 28 Tagen              55

Biegungsfestigkeit, MPa

    nach 5 Stunden               6

    nach 28 Tagen              12

Abriebkoeffizient, $g/cm^2$        0,76

Wasseraufnahme nach 28 Tagen, %    7,0

Schlagzähigkeit, $J/cm^2$        11,0

Beispiel 16

In 370 ml Wasser löst man Kaliumnatriumtartrat. In die entstandene Lösung gibt man 16 g Kalk und 550 g Gipshalbhydrat bei ununterbrochenem Rühren und anschließend 26 g durch 16 g Karbamidharz modifizierte Glasfasern. Die aufbereitete Komposition hat folgende Zusammensetzung (Masse%):

Gipshalbhydrat               55,0

Kalk                         1,6

Kaliumnatriumtartrat         2,2

Glasfasern, modifiziert      2,6

    durch 1,6 % Karbamidharz

Wasser                     38,6

Auf dem Boden einer Preßform breitet man 120 g Kies der Korngruppe 5 bis 10 mm, modifiziert durch 1,5 g Karbamidharz, aus.

Dann gießt man die aufbereitete Komposition in die Form und preßt sie bei einem Druck von 10 MPa bei gleichzeitiger Ableitung des Wassers.

Die entstandene Gipsplatte für Fußböden mit einem restlichen Wasserfestverhältnis von 0,21 hat eine glatte Sichtfläche, auf der die Berührungspunkte des Kieses sichtbar sind.

Die Platte hat folgende physikalisch-mechanischen Kennwerte:

Druckfestigkeit, MPa

    nach 5 Stunden               25

    nach 28 Tagen              53

Biegungsfestigkeit, MPa

    nach 5 Stunden           5,5

    nach 28 Tagen          10,2

Abriebkoeffizient, $g/cm^2$    0,6

Wasseraufnahme nach 28 Tagen, %    6

Schlagzähigkeit, $J/cm^2$    8,0

Gewerbliche Anwendbarkeit

Aus der erfindungsgemäßen, in eine Form eingebrachten und unter Druck mit Ableitung des Wasserüberschusses geformten Komposition können Blöcke, Bausteine, Zwischenwandplatten sowie Dekorations-und Verkleidungsplatten hergestellt werden, die im Gesellschafts-und Industriebau Verwendung finden.

Derartige Dekorations-und Verkleidungsplatten besitzen vorgegebene dekorative Eigenschaften (Oberflächenform, Textur und Färbung des Musters), die bei Natursteinen nicht anzutreffen sind.

PATENTANSPRÜCHE

1. Komposition zur Herstellung von Gipserzeugnissen, die eine Gipskomponente, Kalk und Wasser einschließt, dadurch g e k e n n z e i c h n e t , daß sie als Gipskomponente gipshaltige Abfälle bei folgendem Verhältnis der Komponenten enthält (Masse%):

gipshaltige Abfälle                25 bis 46
Kalk                               8,0 bis 24,5
Wasser                             bis 100

2. Komposition nach Anspruch 1, dadurch g e - k e n n z e i c h n e t , daß sie Gipspappeabfälle als gipshaltige Abfälle enthält und folgende Zusammensetzung hat (Masse%):

Gipspappeabfälle                   42 bis 46
Kalk                               20 bis 24,5
Wasser                             bis 100

3. Komposition nach Anspruch 1, dadurch g e - k e n n z e i c h n e t , daß sie ein Gipsbindemittel und als gipshaltige Abfälle Gipsstein enthält bei folgendem Verhältnis der Komponenten (Masse%):

Gipsstein                          25 bis 40
Gipsbindemittel                    3 bis 10
Kalk                               8,5 bis 20
Wasser                             bis 100

4. Komposition nach Anspruch 3, dadurch g e - k e n n z e i c h n e t , daß sie auch 4 bis 5 Masse% Kaliumaluminiumalaun enthält.

5. Komposition, die ein Gipsbindemittel, Kalk und Wasser enthält, dadurch g e k e n n z e i c h n e t , daß sie Zusätze enthält, und zwar Kaliumaluminiumalaun, Eisenvitriol, Mineralpigment, tierischen Leim, zusammen genommen, oder durch Kunstkautschuklatex oder durch ein wasserlösliches Polymerisationsharz modifizierte Glasfasern und Kaliumnatriumtartrat bei folgendem Verhältnis der Komponenten (Masse%):

| | |
|---|---|
| Gipsbindemittel | 50 bis 62 |
| Kalk | 0,4 bis 3,0 |
| Kaliumaluminiumalaun | 0,1 bis 1,0 |
| Eisenvitriol | 0,4 bis 1,5 |
| Mineralpigment | 0,04 bis 0,55 |
| tierischer Leim | 0,08 bis 0,5 |

oder

| | |
|---|---|
| Glasfasern, modifiziert durch Kunstkautschuklatex oder wasserlösliches Polymerisationsharz | 1,5 bis 8,0 |
| Kaliumnatriumtartrat | 1,2 bis 3,1 |
| Wasser | bis 100 |

6. Komposition nach Anspruch 5, dadurch gekennzeichnet, daß sie Glasfasern enthält, die durch 1,7 bis 2,7 Masse% Kunstkautschuklatex oder durch 0,6 bis 1,6 Masse% wasserlösliches Polymerisationsharz modifiziert worden sind.

# INTERNATIONAL SEARCH REPORT

0269736

International Application No | PCT/SU86/00055

## I. CLASSIFICATION OF SUBJECT MATTER (if several classification symbols apply, indicate all) [6]

According to International Patent Classification (IPC) or to both National Classification and IPC

IPC[4] - C 04 B 11/00, 28/14

## II. FIELDS SEARCHED

### Minimum Documentation Searched [7]

| Classification System | Classification Symbols |
|---|---|
| IPC[4] | C 04 B 11/00, 28/14, C 03 C 25/02, C 08 L 61/06, C 01 F 11/46 |

Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| X | JP, B1, 48-16794 (ONODA SEMENTO K.K.) 24 May 1973 (24.05.73), see columns 2,5,6 | 1 |
| Y | JP, B1, 48-16794 (ONODA SEMENTO K.K.) 24 May 1973 (24.04.73), see columns 2,5,6 | 2,3 |
| Y | G. V. Nagibin , et al. "Tekhnologia teploi-zolyatsionnykh materialov", 1973, Vysschaya Shkola (Moscow), see page 377 | 2 |
| Y | FR, A1, 2380234 (RHONE-POULENC INDUSTRIES) 8 September 1978 (08.09.78), see page 1, line 34 | 3 |
| Y | P.P. Budnikov, "Gips, ego issledovanie i primenenie", 1943, Gosudarstvennoe izdatel-stvo stroitelnoi literatury (Moscow, Lenin-grad), see pages 156, 299 | 4 |
| Y | Sbornik trudov "Avtoklavnye silikatnye materialy i konstruktsii, Vyazhuschie materialy ", no. 44 (72), 1981, VNIISTROM | ./... |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search 26 November 1986 (26.11.86) | Date of Mailing of this International Search Report 26 February 1987 (26.02.87) |
|---|---|
| International Searching Authority ISA/SU | Signature of Authorized Officer |

Form PCT/ISA/210 (second sheet) (January 1985)

## III. DOCUMENTS CONSIDERED TO BE RELEVANT    (CONTINUED FROM THE SECOND SHEET)

| Category* | Citation of Document, with indication, where appropriate, of the relevant passages | Relevant to Claim No |
|---|---|---|
| | (Moscow), P.F. Gordashevsky, et al. "Vliyanie dobavok soderzhaschikh sulfat-ion na stroilelno-tekhnicheskie svoistva vyazhuschikh iz fosfogipsa", see pages 118-122 | 4 |
| Y | SU, A1, 668915 (V.I. Batjushko, et al.) 30 June 1979 (30.06.79), see column 4 | 5 |
| Y | B.V. Osin "Negashenaya izvest kak novoe vyazhuschee veschestvo", 1954, Gosudarstvennoe izdatelstvo literatury po stroitelnym materialam (Moscow), see page 321 | 5 |
| Y | JP, A, 57-140351 (Nihon Gosei Kagaku Kogyo K.K.), 30 August 1982 (30.08.82) | 5 |
| Y | JP, B2, 56-11660 (Nippon Semento K.K.) 16 March 1981 (16.03.81), see column 1, lines 16-21, column 2 | 5,6 |
| Y | FR, A1, 2317245 (BAYER AKTIENGESELLSCHAFT), 4 February 1977 (04.02.77), see the claims, | 5,6 |
| Y | US, A, 3940357 (PPG Industries Inc.), 24 February 1976 (24.02.76), see column 13 | 5,6 |
| Y | DE, C3, 2418608 (Gebr. Knauf Westdeutsche Gipswerke), 11 October 1979 (11.10.79) see column 1, line 52 | 5 |

-----------

Form PCT/ISA/210 (extra sheet) (January 1985)